(19) Europäisches Patentamt European Patent Office Office européen des brevets

(11) **EP 4 234 177 A1**

(12) **EUROPEAN PATENT APPLICATION**

(43) Date of publication:
**30.08.2023  Bulletin 2023/35**

(21) Application number: **22305215.0**

(22) Date of filing: **25.02.2022**

(51) International Patent Classification (IPC):
**B25J 9/00** (2006.01)          **B25J 9/16** (2006.01)
**B62D 57/032** (2006.01)        **G06N 3/08** (2023.01)
**G06N 3/00** (2023.01)

(52) Cooperative Patent Classification (CPC):
**G06N 3/08; B25J 9/0006; B25J 9/1605;
B25J 9/161; B25J 9/163; B62D 57/032;**
G05B 2219/40305; G06N 3/008

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Wandercraft**
**75004 Paris (FR)**

(72) Inventors:
• **Duburcq, Alexis**
**75004 Paris (FR)**

• **Schramm, Fabian**
**75004 Paris (FR)**
• **Chevaleyre, Yann**
**75004 Paris (FR)**
• **Bredeche, Nicolas**
**75004 Paris (FR)**
• **Boeris, Guilhem**
**75004 Paris (FR)**

(74) Representative: **Regimbeau**
**20, rue de Chazelles**
**75847 Paris Cedex 17 (FR)**

(54) **METHODS FOR TRAINING A NEURAL NETWORK AND FOR USING SAID NEURAL NETWORK TO STABILIZE A BIPEDAL ROBOT**

(57)    The present invention relates to a method for training a neural network for stabilizing a bipedal robot (1) presenting a plurality of degrees of freedom actuated by actuators, the method being characterised in that it comprises the implementation by the data processing means (11) of a server (10) of steps of:

(a) In a simulation, applying a sequence of pushes on a virtual twin of the robot (1).

(b) Performing a reinforcement learning algorithm on said neural network, wherein the neural network provides commands to said actuators of the virtual twin of the robot (1), so as to maximise a reward representative of a recovery of said virtual twin of the robot (1) from each push.

**FIG. 1**

EP 4 234 177 A1

**Description**

GENERAL TECHNICAL FIELD

The present invention relates to the field of exoskeleton type robots.

More specifically, it relates to methods for training a neural network and for using said neural network to stabilize a bipedal robot such as an exoskeleton.

PRIOR ART

Recently, for persons with significant mobility problems such as paraplegics, assisted walking devices called exoskeletons have appeared, which are external robotised devices that the operator (the human user) "slips on" thanks to a system of fasteners which links the movements of the exoskeleton with his own movements. The exoskeletons of lower limbs have several joints, generally at least at the level of the knees and the hips, to reproduce the walking movement. Actuators make it possible to move these joints, which in their turn make the operator move. An interface system allows the operator to give orders to the exoskeleton, and a control system transforms these orders into commands for the actuators. Sensors generally complete the device.

These exoskeletons constitute an advance compared to wheelchairs, because they allow operators to get back on their feet and to walk. Exoskeletons are no longer limited by wheels and can theoretically evolve in the majority of non-flat environments: wheels, unlike legs, do not make it possible to clear significant obstacles such as steps, stairs, obstacles that are too high, etc.

However, achieving dynamic stability for such exoskeletons is still a challenge. Continuous feedback control is required to keep balance since the vertical posture is inherently unstable. Trajectory planning for bipedal robots has been solved successfully through whole-body optimization, and stable walking on sensibly flat ground and without major disturbances was achieved on the exoskeleton Atalante of the present applicant by using advanced traditional planning approaches, see for instance the patents applications EP3568266 and FR3101463, or the document T. Gurriet, S. Finet, G. Boeris, A. Duburcq, A. Hereid, O. Harib, M. Masselin, J. Grizzle, and A. D. Ames, "Towards restoring locomotion for paraplegics: Realizing dynamically stable walking on exoskeletons," in 2018 IEEE International Conference on Robotics and Automation (ICRA), 2018, pp. 2804-2811.

Yet, so-called "emergency recovery" is still an open problem. In more details, while the exoskeleton is perfectly able to keep a smooth and stable trajectory while walking, it may be thrown off balance if it undergoes a strong and unexpected disturbance like a push, which could result in the human operator being hurt and/or the robot being damaged.

For small perturbations, in-place recovery strategies controlling the Center of Pressure (CoP), the centroidal angular momentum, or using foot-tilting are sufficient.

To handle stronger perturbations, controllers based on Zero-Moment Point (ZMP) trajectory generation have been proposed, along with Model Predictive Control (MPC) methods controlling the ZMP, but in practice the efficiency was very limited.

Consequently, there is still a need for a purely reactive controller for standing push recovery on exoskeletons, to be used as the last resort fallback in case of emergency, and able to feature a variety of human-like balancing strategies while guaranteeing predictable, safe and smooth behavior.

DESCRIPTION OF THE INVENTION

For these purposes, the present invention provides, according to a first aspect, a method for training a neural network for stabilizing a bipedal robot presenting a plurality of degrees of freedom actuated by actuators, the method being characterised in that it comprises the implementation by the data processing means of a server of steps of:

(a) In a simulation, applying a sequence of pushes on a virtual twin of the robot.
(b) Performing a reinforcement learning algorithm on said neural network, wherein the neural network provides commands to said actuators of the virtual twin of the robot, so as to maximise a reward representative of a recovery of said virtual twin of the robot from each push.

Preferred but non limiting features of the present invention are as follow:

Said simulation lasts for a predetermined duration, steps (a) and (b) being repeated for a plurality of simulations.

Pushes are applied periodically over the duration of the simulation, with forces of constant magnitude applied for a predetermined duration.

Pushes are applied on a pelvis of the virtual twin of the robot with an orientation sampled from a spherical distribution.

At least one terminal condition on the virtual twin of the robot is enforced during step (b).

Said terminal condition is chosen among a range of positions and/or orientations of a pelvis of the exoskeleton, a minimal distance between feet of the robot, a range of positions and/or velocities of the actuators, a maximum difference with an expected trajectory, a maximum recovery duration, and a maximum power consumption.

Said simulation outputs a state of the virtual twin of the robot as a function of the pushes and the commands provided by the neural network.

The robot comprises at least one sensor for observing the state of the robot, wherein the neural network takes as input in step (b) the state of the virtual twin of the robot as outputted by the simulation.

The neural network provides as commands target positions and/or velocities of the actuators, and a control loop mechanism determines torques to be applied by the actuators as a function of said target positions and/or velocities of the actuators.

The neural network provides commands at a first frequency, and the control loop mechanism provides torques at a second frequency which is higher than the first frequency.

Step (b) comprises performing temporal and/or spatial regularization, so as to improve smoothness of the commands of the neural network.

The method comprises a step (c) of storing the trained neural network in a memory of the robot.

The bipedal robot is an exoskeleton accommodating a human operator.

According to a second aspect, the invention proposes a method for stabilizing a bipedal robot presenting a plurality of degrees of freedom actuated by actuators, characterized it comprises the steps of:

(d) providing commands to said actuators of the robot with the neural network trained using the method according to the first aspect.

According to a third aspect, the invention proposes a system comprising a server and a bipedal robot presenting a plurality of degrees of freedom actuated by actuators, each comprising data processing means, characterized in that said data processing means are respectively configured to implement the method for training a neural network for stabilizing the robot according to the first aspect and the method for stabilizing the exoskeleton according to the second aspect.

According to a fourth and a fifth aspect, the invention proposes a computer program product comprising code instructions for executing the method for training a neural network for stabilizing the robot according to the first aspect or the method for stabilizing the robot according to the second aspect; and a computer-readable medium, on which is stored a computer program product comprising code instructions for executing the method for training a neural network for stabilizing the robot according to the first aspect or the method for stabilizing the robot according to the second aspect.

## DESCRIPTION OF THE FIGURES

Other characteristics and advantages of the present invention will become clear on reading the description that follows of a preferential embodiment. This description will be given with reference to the appended drawings in which:

- figure 1 illustrate an architecture for the implementation of the methods according to the invention;
- figure 2 represents an exoskeleton used in the methods according to the invention;
- figure 3 is a diagram illustrating a preferred embodiment of the methods according to the invention;
- figure 4 represents a virtual twin of the exoskeleton in a simulation;
- figure 5 is on overview of a proposed control system in the methods according to the invention.

## DETAILED DESCRIPTION

### Architecture

According to two complementary aspects of the invention, are proposed:

- a method for training a neural network, in particular of the "forward propagation" type (FNN, "Feedforward Neural Network") for stabilizing a bipedal robot 1; and
- a method for stabilizing a bipedal robot 1 (using a neural network, advantageously trained thanks to the aforementioned method).

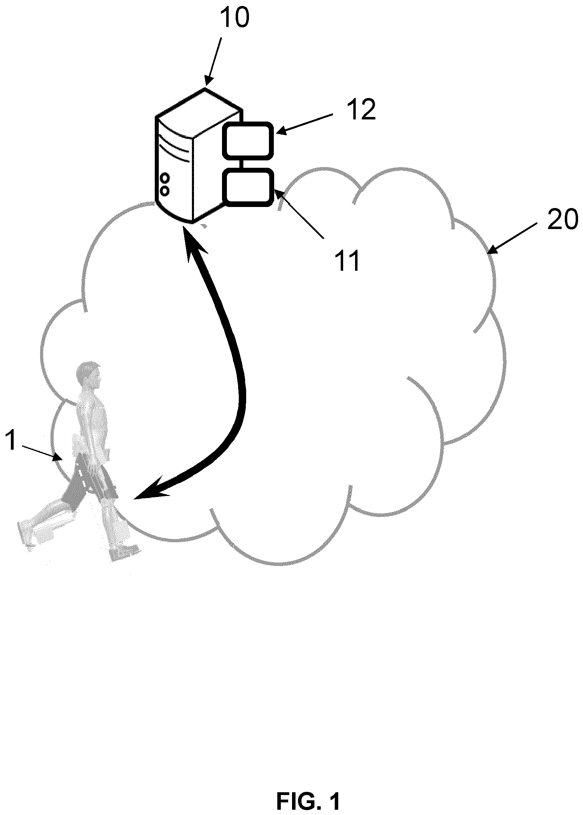

These two types of processes are implemented within an architecture as shown in **figure 1**, thanks to a server 10.

The server 10 is the training server (implementing the first method) and the robot 1 implements the second method. In other words, the robot 1 directly applies said neural network once trained, to stabilize the exoskeleton (in particular by performing "emergency recovery" as previously explained).

It is quite possible that the server 10 be embedded by the robot 1, but in practice the server 10 is a remote server.

The server 10 is typically a computer equipment connected to the robot 1 via any kind of network 20 such as the Internet network for the exchange of data, even if in practice, once the neural network has been trained and deployed, i.e. provided to the robot 1, the communication can be interrupted, at least intermittently.

Each of the server 10 and the exoskeleton 1 comprises processor-type data processing means 11, 11' (in particular the data processing means 11 of the server 10 have a high computing power, because the training is long and complex compared to the simple application of the learned neural network to new data, referred to as inference), and if appropriate data storage means 12, 12' such as a computer memory, for example a hard disk.

It will be understood that there can be a plurality of robots 1 each connected to the server 10.

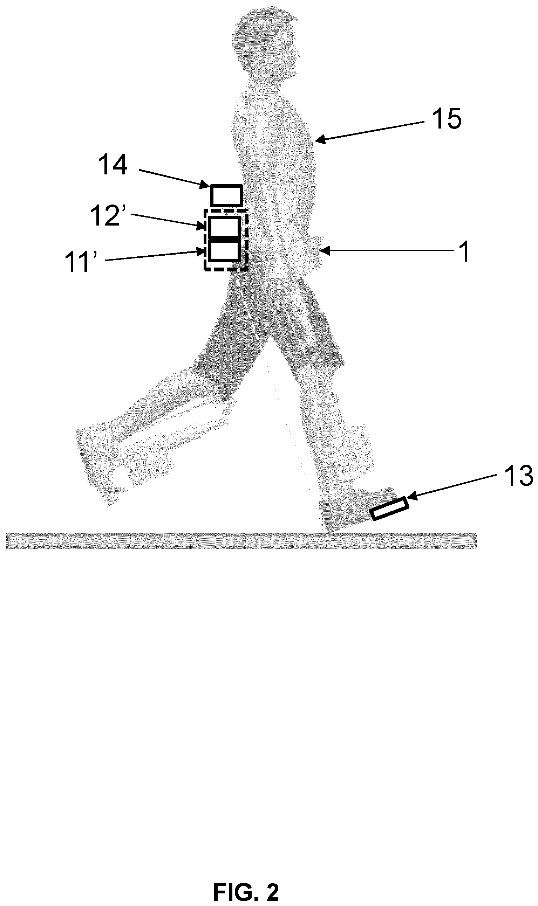

By bipedal robot 1 it is meant an articulated mechanical system, actuated and commanded, provided with two legs, which is more preferably an exoskeleton such as represented **figure 2,** which is a more specific bipedal robot accommodating a human operator having his lower limbs each integral with a leg of the exoskeleton 1. This can be ensured notably thanks to straps.

In the following specification, the preferred example of an exoskeleton will be described, as this is the most difficult type of bipedal robot to stabilize, but the present method is efficient for any other bipedal robot, such as humanoid robots.

By "stabilizing" the exoskeleton 1, it is meant preserving its balance as much as possible and in particular preventing it from falling even in case of strong perturbations thanks to emergency recovery. By "emergency recovery" it is meant a reflex movement of the exoskeleton 1 which is to be leveraged in case of emergency in response to a perturbation (i.e. used as the last resort fallback), such as tilting the pelvis or executing a step. The emergency recovery is successful when the exoskeleton 1 comes back to a safe posture, in particular a standstill posture if it was not walking prior to the perturbation. Note that the recovery should be as "static" as possible (i.e. involve a minimal movement), but in case of a strong perturbation it may sometimes require several steps to prevent falling.

The exoskeleton 1 comprises on each leg a foot structure comprising a support plane on which a foot of a leg of the person wearing the exoskeleton can be supported.

The exoskeleton 1 has a plurality of degrees of freedom, that is to say deformable joints (generally via a rotation) that is to say moveable with respect to each other, which are each either "actuated" or "non-actuated".

An actuated degree of freedom designates a joint provided with an actuator controlled by data processing means 11', that is to say that this degree of freedom is controlled and that it is possible to act upon. Conversely, a non-actuated degree of freedom designates a joint not provided with an actuator, that is to say that this degree of freedom follows its own dynamic and that the data processing means 11' do not have direct control of it (but a *priori* an indirect control via the other actuated degrees of freedom). In the example of figure 2, the heel-ground contact is punctual, and the exoskeleton 2 is thereby free in rotation with respect to this contact point. The angle between the heel-hip axis and the vertical then constitutes a non-actuated degree of freedom.

In a preferred embodiment, the exoskeleton 1 comprises 6 actuators on each leg (i.e. 12 actuators), and a set of sensors referred to as "basic proprioceptive sensors", such as means for detecting the impact of the feet on the ground 13 and/or at least one inertial measurement unit (IMU) 14. In figure 2, there is a "pelvis IMU" 14 at the back of the exoskeleton, but there could be further IMUs such as left/right tibia IMUs and/or left/right foot IMUs, etc. Note that there could be further sensors, and in particular an encoder for each actuator (measuring the actuator position).

The data processing means 11' designate a computer equipment (typically a processor, either external if the exoskeleton 1 is "remotely controlled" but preferentially embedded in the exoskeleton 1, suited to processing instructions and generating commands intended for the different actuators. As explained, said data processing means 11' of the exoskeleton 1 will be configured to implement said neural network to control the actuated degrees of freedom (through the actuators). Said actuators may be electric, hydraulic, etc.

The operator can be equipped with a sensor vest 15 that detects the configuration of his torso (orientation of the torso). The direction in which the operator points his chest is the direction in which he wants to walk and the speed is given by the intensity with which he puts his chest forward (how far he bends).

The present application will not be limited to any exoskeleton architecture 1, and the example such as described in the applications WO2015140352 and WO2015140353 will be taken.

Those skilled in the art will however know how to adapt the present method to any other mechanical architecture.

*Training method*

According to the first aspect, the invention proposes the method for training the neural network for stabilizing the exoskeleton 1 accommodating a human operator and presenting a plurality of actuated degrees of freedom, performed by the data processing means 11 of the server 10.

While the use of a neural network for stabilizing bipedal robots is known, the present invention proposes an original training of such neural network.

More precisely, said neural network is trained by performing a reinforcement learning algorithm in a simulation specifically conceived to trigger emergency recovery. In other words, this neural network simply acts as a last resort solution for stabilizing the exoskeleton 1 in case of emergency. Said neural network does not have another role such as applying trajectories.

By training a neural network, it is meant defining suitable values of parameters $\theta$ of the neural network, such that the neural network implements an efficient "policy" $\pi_\theta$ for acting in response to a perturbation, see blow.

As explained, the neural network is for example a feedforward neural networks without any memory, possibly with 2 hidden layers with 64 units each, activation layers such as LeakyReLU, a linear output layer. Note that alternative architectures such as with convolution layers are possible. For better generalization, may be chosen architectures with the minimal number of parameters necessary to get satisfactory performance. Hereby, it avoids overfitting, which leads to more predictable and robust behavior on the robot, even for unseen states.

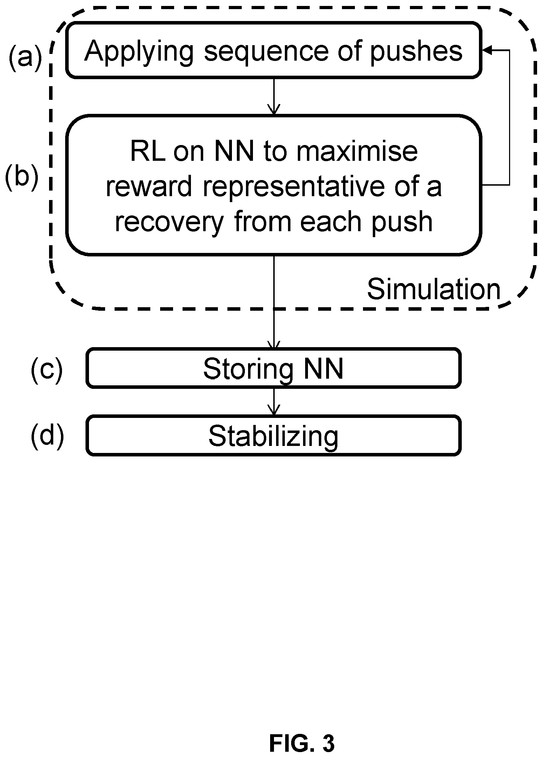

As represented by **figure 3,** in a first step (a), the method comprises applying, in said simulation, a sequence of pushes on a virtual twin of the exoskeleton 1. By "virtual twin", it is meant a virtual replica of the exoskeleton 1 in the simulation, with the same actuators, sensors, properties, etc. The human operator is advantageously considered as rigidly fastened to the exoskeleton 1. In this regard, the system exoskeleton-human can be viewed as a humanoid robot after aggregating their respective mass distributions.

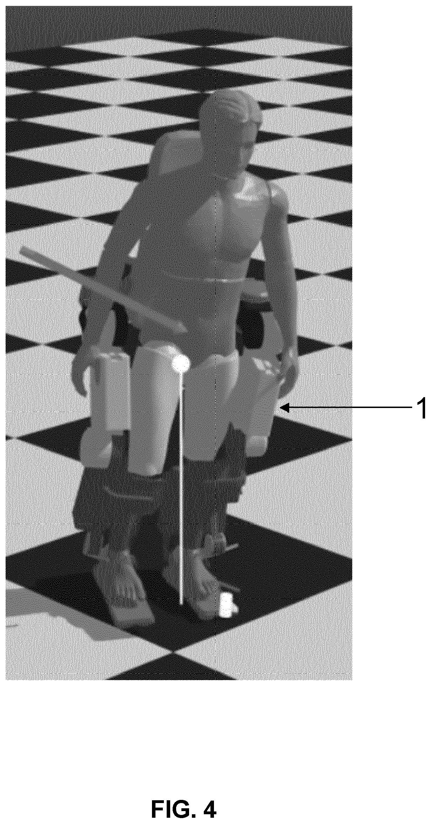

The open-source simulator Jiminy can be for example used as the simulation environment, see **figure 4**. It has been created for control robotic problems and designed for realistic simulation of legged robots. Jiminy includes motor inertia and friction, sensor noise and delay, accurate constraint-based ground reaction forces, as well as an advanced mechanical flexibility model.

By "push", it is meant an external force applied to the virtual twin exoskeleton 1 for disturbing its stability. To learn sophisticated recovery strategies, the external pushes in the learning environment need to be carefully designed. It must be strong enough to sometimes require stepping, but pushing too hard would prohibit learning. Moreover, increasing the maximum force gradually using curriculum learning is risky, as the policy tends to fall in local minima.

In a preferred embodiment, said sequence of pushes apply forces of constant magnitude for a predetermined (short) duration periodically on the pelvis, where the orientation is sampled from a spherical distribution. In other words, all pushes of the sequence have roughly the same magnitude of force and the same duration but a different orientation.

For instance, the pushes can be applied every 3s, with a jitter of 2s to not overfit to a fixed push scheme and learn recovering consecutive pushes. The pushes are bell-shaped instead of uniform for numerical stability, have a peak magnitude of Fmax = 800N and are applied during 400ms.

Then in a step (b), the processing unit 11 performs a reinforcement learning algorithm on said neural network, wherein the neural network provides commands to said actuators (i.e. control them) of the virtual twin of the exoskeleton 1, so as to maximise a reward representative of a recovery of said virtual twin of the exoskeleton 1 from each push. In other words, the better the recovery, the higher the reward.

By "reinforcement learning" (RL), it is meant a machine learning paradigm wherein an agent (the neural network) ought to take actions (emergency recoveries) in an environment (the simulation) in order to maximize the reward. The goal of RL is that the agent learns a "policy", i.e. the function defining the action to be taken as a function of its state. Reinforcement learning differs from supervised learning in not needing labelled input/output pairs, and in not needing sub-optimal actions to be explicitly corrected. Instead, the focus is on finding a balance between exploration (of uncharted state-action space) and exploitation (of current knowledge).

In order to find the suitable actions to be made, the RL can here use any suitable optimisation technique, in particular policy gradient methods, and preferably the Trust Region Policy Optimisation (TRPO), or even the Proximal Policy Optimization (PPO) which is simplifies the optimization process with respect to TRPO while efficiently preventing "destructive policy updates" (overly large deviating updates of the policy).

Note that RL in simulation has been already used for training neural networks to control bipedal robots and transfer to reality achieved with success (i.e. application of the trained neural network to the real robot), but only for the task of walking, i.e. so as to reproduce a corresponding reference motion from a gait library, see the document Z. Li, X. Cheng, X. B. Peng, P. Abbeel, S. Levine, G. Berseth, and K. Sreenath, "Reinforcement learning for robust parameterized locomotion control of bipedal robots," CoRR, vol. abs/2103.14295, 2021. While the robot "Cassie" incidentally demonstrates a stability to some pushes in this document, this is mostly due to the design of Cassie - lack of upper body and almost weightless legs - the neural network is actually not trained to emergency recovery and the same level of performance cannot be expected for exoskeletons.

As it will be explained, the neural network preferably controls said actuated degrees of freedom of the virtual twin of the exoskeleton 1 by providing target torques $\tau$ to be applied by the actuators as commands. Note that the neural network may directly output the torques, or indirectly outputs other parameter(s) such as target position/velocities of the actuators, from which the torques can be calculated in a known fashion using a control loop mechanism (such as a proportional-derivative controller, see after).

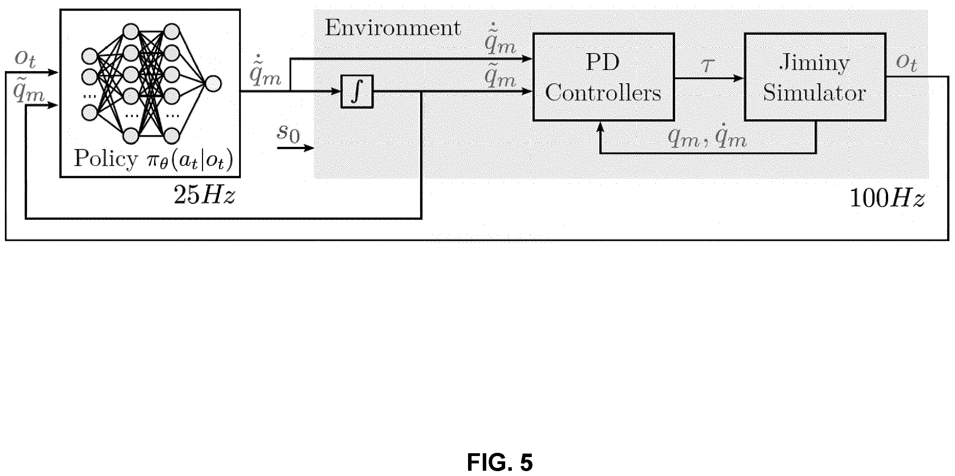

In a preferred embodiment of the present invention, the neural network and the environment interact according to the **figure 5**:

- The state of the system $s_t$ at time t is defined by the position $q_{x,y,z} := [q_x; q_y; q_z]^T$, orientation $q_{v,v,\varphi}$, linear velocity $\dot{q}_{x,y,z}$ and angular velocity $\dot{q}_{\psi,v,\varphi}$ of the pelvis of the exoskeleton 1, in addition to the positions $q_m$ and velocities $\dot{q}_m$ of the actuated degrees of freedom (i.e. motor position and velocities). It is to be understood that the state of the exoskeleton also represents the non-actuated degrees of freedom, on which the neural network does not have a direct control. The state of the human operator is discarded since it is not observable and the coupling with the exoskeleton not modelled. As a result, the human is considered as an external disturbance. Even so, the state of the system st is not fully observable e.g. due to flexibilities.

- The observation $o_t \in O \subset \mathbb{R}^n$ is computed from the measurement of the sensors 13, 14. This observation space can reach 49 dimensions (less than the state space, which can reach 68, as not all the state is observable). Note that, the target motor positions $\tilde{q}_m^{t-1}$ from the last time step can be included in the observation. No window over several time steps is accumulated. The quantities are individually normalized over training batches to avoid manual estimation of the sensitivity of every component of the observation space, which would be hazardous since it heavily depends on policy itself. Some insightful quantities cannot be reliably estimated without exteroceptive sensors, e.g. the pelvis height $q_z$ and its linear velocity $\dot{q}_{x;y;z}$. They are not included in the observation space because any significant mismatch between simulated and real data may prevent transfer to reality.

- so is the state wherein the agent starts an episode (i.e. a simulation), which may vary. The initial state distribution po(so):S → O defines the diversity of states so in which the agent can start. Choosing this distribution appropriately is essential to explore a large variety of states and to discover robust recovery strategies. Indeed, to be efficient, it is necessary to sample as many recoverable states as possible. Naive random sampling would lead to many unfeasible configurations that trigger terminal conditions (see after) instantly or are unrecoverable. Therefore, the best solution is to sample $s_0$ normally distributed around a set of diverse reference trajectories, which enables to explore many different but feasible configurations.

- the neural network outputs target velocities of the actuated degrees of freedom as a function of the observation ot and the target positions $\tilde{q}_m$ of the actuators that may be obtained by integration from the outputted target velocities to enforce a smooth behavior, at a preferred first frequency of 25Hz.

- As explained, the neural network is preferably configured to output some "high-level" targets (the target positions and/or velocities of the actuators), that are forwarded to a decentralized low-level control loop mechanism (in particular a PD controller) determining torques $\tau$ at a higher second frequency (such as 100 Hz). Such hybrid control architecture improves efficiency, robustness, and transferability on real hardware compared to predicting torques directly. Decoupled control of each joint is well-known to be robust to model uncertainties. Moreover, these controllers can be tuned to trade off tracking accuracy versus compliance, smoothing out vibrations and errors in the predicted actions.

- The target torques are applied to the virtual twin of the exoskeleton 1 in the simulation to update the state. The virtual twin "moves" and consequently the simulator outputs the updated positions and velocities of the actuators to the PD controller, and most importantly the updated observation $o_t$.

It is thus to be understood that steps (a) and (b) are actually simultaneous: the neural network attempts to performs an emergency recovery for each push of the sequence by suitably controlling the actuators.

Said simulation preferably lasts for a predetermined duration, such as 60s. Steps (a) and (b) are typically repeated for a plurality of simulations, possibly thousands or even millions of simulations, referred to as "episodes". Thus, the environment is reset at each new simulation: if the virtual twin falls in a simulation, it can be force-reset or waited up to the beginning of the next simulation.

In addition, at least one terminal condition on the virtual twin of the exoskeleton 1 is preferably enforced during step (b). The terminal conditions are to be seen as hard constraints such as hardware limitations and safety. Besides, they enhance convergence robustness by preventing falling in bad local minima.

Each terminal condition is advantageously chosen among a range of positions and/or orientations of a pelvis of the exoskeleton 1, a minimal distance between feet of the exoskeleton 1, a range of positions and/or velocities of the actuators, a maximum difference with an expected trajectory, a maximum recovery duration, and a maximum power consumption. Preferably, a plurality of these terminal conditions (and even all of them) are enforced.

1) range of positions and/or orientations of a pelvis. To avoid frightening the user and people around, the pelvis motion is restricted. For instance the following ranges can be applied:

$q_z > 0.3$ m; $0.4$ rad $< q_\psi < 0.4$ rad; $0.25$ rad $< q_\varphi < 0.7$ rad

2) minimal distance between feet. For safety, foot collisions need to be avoided which can hurt the human operator and damage the robot. For instance the following formula can be applied:

D(CH$_r$;CH$_l$) > 0:02; where CH$_{r;l}$ is the convex hull of the right and left footprints respectively and D the euclidean distance.

3) range of positions and/or velocities of the actuators. Hitting the mechanical bounds of an actuator i with a large velocity leads to destructive damage, i.e the following formula can be applied:

$\dot{q}_i$ < 0.6 rad/s or $q_i^-$ < $q_i$ < $q_i^+$ It is critical to define the extremal positions $q_i^-$ and $q_i^+$ depending on the velocity, as otherwise the problem is too strictly constrained.

4) maximum difference with an expected trajectory, i.e. reference dynamics. As explained, the exoskeleton might already be following a reference trajectory defined by a function noted $\hat{q}_m(t)$ (expected positions of actuators over the trajectory - which is equal to 0 in case of a standstill posture), and odometry change has to be restricted for the pelvis position in "world plan", noted $p_b$ = $q_{x,y,\varphi}$. This avoids long-term divergence when the exoskeleton is already able to track an expected reference trajectory. For instance the following formula can be applied:

$$\left|\Delta q_{x,y,\varphi} - \Delta \hat{q}_{x,y,\varphi}\right| < \left[2.0, 3.0, \frac{\pi}{2}\right], \text{ where } \Delta \star = \star^t - \star^{t-\Delta T} \text{ with } \Delta T = 20s.$$

Note that in the following specification, each quantity noted with a $\wedge$ will be understood as this quantity in the reference trajectory. For example, $\hat{p}_b(t)$ is the expected pelvis position of the reference trajectory.

5) maximum recovery duration, i.e. "transient dynamics": To handle strong pushes, large deviations of actuator positions shall be allowed, but coming back quickly to the reference trajectory afterwards. For instance the following formula can be applied:

$$\exists t' \in [t - \Delta T, t] \text{ such that } \|q_m(t') - \hat{q}_m(t')\|_2 < 0.3 \text{ with } \Delta T = 4s$$

6) maximum power consumption: the power consumption is to be limited to fit the hardware specification, for instance at 3kW.

*Reward shaping*

As mentioned, the RL maximises a reward representative of a recovery of said virtual twin of the exoskeleton 1 from each push. The reward can be seen as a score calculated at each simulation by the training algorithm, that is sought to be as high as possible. The idea is to have a high reward when the virtual twin exoskeleton performs efficient recoveries, i.e. stays balanced, and a low reward else, for example if it falls. To rephrase again, the reward is increasing with the efficiency of the stabilization.

The reward preferably comprises a set of reward components to obtain a natural behavior that is comfortable for the user and to provide insight in how to keep balance.

The reward can also be used as a mean to trigger recovery as late as possible, as it is thought as the last resort emergency strategy.

Note that, in order to be generic, the reward can also be used for reference gait (i.e. following reference trajectory) training.

In a case of plurality of reward components, the total reward can be a weighted sum of the individual objectives: $r_t = \Sigma_i \omega_i K(r_i)$ where $r_i$ is the reward component, $\omega_i$ its weight and K a kernel function that is meant to scale them equally, such as the Radial Basis Function (RBF) with cutoff parameter k (i.e. $K(r_i) = exp\left(-\kappa r_i^2\right) \in [0, 1]$).

The gradient vanishes for both very small and large value as a side-effect of this scaling. The cutoff parameter $\kappa$ is used to adjust the operating range of every reward component.

There are lots of possible rewards (or reward components) representative of a recovery of said virtual twin of the exoskeleton 1 from each push, including naive ones such as simply counting the number of seconds before the exoskeleton falls. The skilled person will be limited to any specific choice of reward(s) as long as it assesses the ability of the virtual twin of the exoskeleton 1 to recover from each push.

We note that in the example of RBF, K has a maximum when $r_i$=0, i.e. decreasing in the interval $\mathbb{R}^+$. This means that the reward components shall in this case be chosen as decreasing with respect to the ability to recover from each push (i.e. the better the recovery, the lower the reward component value as it is formulating an error), which will be the case in the following examples, but the skilled person can totally use differently constructed reward components which are increasing functions, with the suitable increasing K function.

In the preferred example, there may be 3 class of rewards:

1) Reference Dynamics. A set of independent high-level features can be extracted to define reward components for each of them, so as to promote boiling down to a comfortable and stable resting pose for push recovery.

- Odometry. As explained, regarding the safety of push recovery steps, odometry change has to be as limited as possible for the pelvis position $p_b$, i.e. the reward component could be $\|p_b - \hat{p}_b(t)\|_2$.
- Reference configuration. The expected position shall follow the reference trajectory as close as possible, i.e. the reward component could be $\|q_m - \hat{q}_m(t)\|_2$.
- Foot positions and orientations. When recovering, the feet should be flat on the ground at a suitable distance from each other. Without promoting it specifically, the policy learns spreading the legs, which is both suboptimal and unnatural. One has to work in a symmetric, local frame, to ensure this reward is decoupled from the pelvis state, which would lead to unwanted side effect otherwise. If the "mean foot yaw" is introduced as

$$\overline{\varphi} = \left(p_\varphi^l + p_\varphi^r\right)/2$$

(with $p_\varphi^l$ and $p_\varphi^r$ the respective yaw of the left and right feet) and then the relative position of the feet $p^{r-l} = R^{\overline{\varphi}}(p^r - p^l)$, rewards for the foot position and orientation could be defined as

$$\left\|\left(p_{x,y}^{r-l} - \hat{p}_{x,y}^{r-l}, p_z^{r-l}\right)\right\|,\ \left\|\left(p_{\psi,v}^{r,l}, p_{\psi,v}^{r,l} - \hat{p}_\varphi^{r,l}\right)\right\|.$$

2) Transient Dynamics. Following a strong perturbation, recovery steps are executed to prevent falling in any case.

- Foot placement. The idea is to act as soon as the Center of Pressure (CP) goes outside the support polygon, by encouraging moving the pelvis toward the CP to get it back under the feet, with for instance the reward component $\|{}^b p_{cp} - {}^b \hat{p}_{cp}(t)\|_2$ where ${}^b p_{cp}$ is the relative CP position in odometry frame.
- Dynamic stability. The ZMP should be kept inside the support polygon for dynamic stability, with for instance the reward component $\|p_{zmp} - p_{SP}\|_2$ where SP is the center of the projected support polygon instead of real support polygon. It anticipates future impact with the ground and is agnostic to the contact states.

3) Safety and Comfort: Safety needs to be guaranteed during operation of the exoskeleton 1. Comfort has the same priority for a medical exoskeleton to enhance rehabilitation.

- Balanced contact forces. Distributing the weight evenly on both feet is key in natural standing, with for instance the reward component $F_z^r \delta^r + F_z^l \delta^l - mg$ v where $\delta^r, \delta^l \in \{0,1\}$ are the right and left contact states and $F_z^r$, $F_z^l$ are the vertical contact forces.
- Ground friction. Reducing the tangential contact forces limits internal constraints in the mechanical structure that could lead to overheating and discomfort. Moreover, exploiting too much the friction may lead to unrealistic behavior, hence the reward component could be $\left\|F_{x,y}^{l,r}\right\|_2$ where $F_{x,y}^{l,r}$ are the x and y tangential forces of left and right foot.
- Pelvis momentum. Large pelvis motion is unpleasant. Besides, reducing the angular momentum helps to keep balance, hence the reward component could be $\|\dot{q}_{\psi,v,\varphi} - \dot{\hat{q}}_{\psi,v,\varphi}\|_2$

At the end of step (b), a neural network able to command said actuators of the exoskeleton 1 to recover from real life pushes is obtained.

*Transfer to real word*

In a following step (c), the trained neural network is stored in a memory 12' of the exoskeleton 1, typically from a memory 12 of the server 10. This is called "transfer to reality", as up to now the neural network has only recover from pushes in simulation, and once sored in the memory 12' the neural network is expected to provide commands to the real actuators of the real exoskeleton 1, so as to perform real recovery of the exoskeleton 1 from unexpected pushes.

Thus, in a second aspect, is proposed the method for stabilizing the exoskeleton 1 accommodating a human operator and presenting a plurality of degrees of freedom actuated by actuators, comprising the steps (d) of providing commands to said actuators of the exoskeleton 1 with the neural network trained using the method according to the first aspect.

As explained the neural network can be generated long before, and be transferred to a large number of exoskeletons 1.

Said second method (stabilizing method) can be numerously performed during the life of the exoskeleton 1, and does not require new transfers, even if the neural network could be updated if an improved policy becomes available.

*Policy regularization*

In lots of prior art attempts, the reality gap has mostly been overlooked and the simulated results hardly transfer to real hardware. Either it is unsuccessful in practice because the physics is over-simplified and hardware limitations are ignored, or regularity is not guaranteed and unexpected hazardous motions can occur.

The present training method enables safe and predictable behavior, which is critical for autonomous systems evolving in a human environment such as bipedal exoskeletons.

In the special case of a medical exoskeleton, the comfort and smoothness is even more critical. Vibrations can cause anxiety, and more importantly, lead to injuries over time since patients have fragile bones.

Therefore, step (b) preferably comprises performing temporal and/or spatial regularization of the policy, so as to improve smoothness of the commands of the neural network. It is also called "conditioning" of the policy.

Usually in RL, smoothness can be promoted by adding regularizers as reward components, such as motor torques, motor velocities or power consumption minimization. However, components in the reward function have no guarantee to be optimized because they have a minor contribution in the actual loss function of RL learning algorithms.

By contrast, injecting the regularization as extra terms in the loss function directly gives control about how much it is enforced during the learning, see for instance the document S. Mysore, B. El Mabsout, R. Mancuso, and K. Saenko, "Regularizing action policies for smooth control with reinforcement learning," 12 2020.

In the preferred embodiment using temporal and spatial regularization promotes smoothness of the learned state-to-action mappings of the neural network, with for instance the following terms:

- temporal regularization term $L^T(\theta) = \|\overline{\pi_\theta}(s_t) - \pi_\theta(s_{t+1})\|_1$

- spatial regularization term $$L^S(\theta) = \left\|\overline{\pi}_\theta(s_t) - \overline{\pi}_\theta(\tilde{s}_t)\right\|_2^2$$ where $\tilde{s}_t \, N(s_t, \sigma_S)$, i.e. sampling function assuming a normal distribution.

These terms can be added to the objection function, possibly with weights, i.e. in the case of PPO (see below):
$L(\theta) = L^{PPO}(\theta) + \lambda_T L^T(\theta) + \lambda_S L^T(\theta)$

$\sigma_S$ is based on expected measurement noise and/or tolerance, which limits its capability to robustness concerns. However, the true power is unveiled when smoothness is further used to shape and enforce a regularity in the behavior of the policy.

By choosing the proper standard deviation, in addition to robustness, a minimal but efficient set of recovery strategies can be learnt, as well as the responsiveness and reactivity of the policy on the real device can be learnt.

A further possible improvement is the introduction of the L1-norm in the temporal regularization. It still ensures that the policy reacts only if necessary and recovers as fast as possible. Yet, it also avoids penalizing too strictly peaks that would be beneficial to withstand some pushes, smoothing out fast very dynamic motions.

Finally, it is more appropriate to use the mean field $\overline{\pi}_\theta$ in the regularization instead of the actual policy outputs $\pi_\theta$. It still provides the same gradient on the network weights $\theta$ but it is now independent of the exploration, which avoids penalizing it.

*Results*

With an episode duration limited to 60s, it corresponds to T = 1500 time steps. In practice, 100M iterations are necessary for asymptotic optimality under worst-case conditions, corresponding to roughly one and half month of experience on a real exoskeleton 1. This takes 6h, obtaining a satisfying and transferable policy, using 40 independent simulation workers on a single machine with 64 physical cores and 1 GPU Tesla V100.

The training curves of the average episode reward and duration show the impact of the main contributions:

- Smoothness conditioning (regularization) slightly slows down the convergence (60M vs 50M), but does not impede the asymptotic reward.
- Using a simplistic reward, namely +1 per time step until early termination (fall), similar training performance can be observed until 25M thanks to the well-defined terminal conditions. After this point, the convergence gets slower but the policy is just slightly under-performing at the end. This result validates convergence robustness and that the general idea to use a reward representative of a recovery of said virtual twin of the exoskeleton 1 from each push provides insight how to recover balance.
- Without the terminal conditions for safety and transferability, fast convergence in around 30M can be achieved. However, it would not be possible to use such policy on the real device.

Further tests shows that smoothness conditioning improves the learned behaviour, cancels harmful vibrations and preserves the very dynamic motions. Moreover, it also recovers balance more efficiently, by taking shorter and minimal action.

Finally, the trained neural network has been evaluated for both an user and a dummy on several real Atalante units. Contrary to the learning scenario with only pushes at the pelvis center, the policy can handle many types of external disturbances: the exoskeleton has been pushed in reality at several different application points and impressive results, are obtained. The recovery strategies are reliable for all push variations and even pulling. The transfer to Atalante works out-of-the-box despite wear of the hardware and discrepancy to simulation, notably ground friction, mechanical flexibility and patient disturbances.

*System*

According to another aspect, the invention relates to the system of the server 10 and the bipedal robot 1 (preferably an exoskeleton accommodating a human operator), for the implementation of the method according to the first aspect (training the neural network) and/or the second aspect (stabilizing the robot).

As explained, each of the server 10 and the robot 1 comprises data processing means 11, 11' and data storage means 12, 12' (optionally external). The robot 1 generally also comprises sensors such as inertial measurement means 14 (inertial unit) and/or means for detecting the impact of the feet on the ground 13 (contact sensors or optionally pressure sensors).

It has a plurality of degrees of freedom actuated by an actuator controlled by the data processing means 11'.

The data processing means 11 of the server 10 are configured to implement the method for training a neural network for stabilizing the robot 1 according to the first aspect.

The data processing means 11' of the robot 1 are configured to implement the method for stabilizing the robot 1 using the neural network according to the second aspect.

*Computer programme product*

According to fourth and fifth aspects, the invention relates to a computer program product comprising code instructions for the executing (on the processing means 11, 11') of a method for training a neural network for stabilizing the robot 1 according to the first aspect or the method for stabilizing the robot 1 according to the second aspect, as well as storage means that can be read by a computer equipment (for example the data storage means 12, 12') on which is found this computer program product.

**Claims**

1. Method for training a neural network for stabilizing a bipedal robot (1) presenting a plurality of degrees of freedom actuated by actuators, the method being **characterised in that** it comprises the implementation by the data processing means (11) of a server (10) of steps of:

    (a) In a simulation, applying a sequence of pushes on a virtual twin of the robot (1).
    (b) Performing a reinforcement learning algorithm on said neural network, wherein the neural network provides commands to said actuators of the virtual twin of the robot (1), so as to maximise a reward representative of a recovery of said virtual twin of the robot (1) from each push.

2. Method according to claim 1, wherein said simulation lasts for a predetermined duration, steps (a) and (b) being repeated for a plurality of simulations.

3. Method according to claim 2, wherein pushes are applied periodically over the duration of the simulation, with forces of constant magnitude applied for a predetermined duration.

4. Method according to any one of claims 1 to 3, wherein pushes are applied on a pelvis of the virtual twin of the robot (1) with an orientation sampled from a spherical distribution.

5. Method according to one of claims 1 to 4, wherein at least one terminal condition on the virtual twin of the robot (1) is enforced during step (b).

6. Method according to claim 5, wherein said terminal condition is chosen among a range of positions and/or orientations of a pelvis of the exoskeleton (1), a minimal distance between feet of the robot (1), a range of positions and/or velocities of the actuators, a maximum difference with an expected trajectory, a maximum recovery duration, and a maximum power consumption.

7. Method according to one of claims 1 to 6, wherein said simulation outputs a state of the virtual twin of the robot (1) as a function of the pushes and the commands provided by the neural network.

8. Method according to claim 7, wherein the robot (1) comprises at least one sensor (13, 14) for observing the state of the robot (1), wherein the neural network takes as input in step (b) the state of the virtual twin of the robot (1) as outputted by the simulation.

9. Method according to any one of claims 1 to 8, wherein the neural network provides as commands target positions and/or velocities of the actuators, and a control loop mechanism determines torques to be applied by the actuators as a function of said target positions and/or velocities of the actuators.

10. Method according to claim 9, wherein the neural network provides commands at a first frequency, and the control loop mechanism provides torques at a second frequency which is higher than the first frequency.

11. Method according to any one of claims 1 to 10, wherein step (b) comprises performing temporal and/or spatial regularization, so as to improve smoothness of the commands of the neural network.

12. Method according to any one of claims 1 to 11, comprising a step (c) of storing the trained neural network in a memory (12') of the robot (1).

13. Method according to any one of claims 1 to 12, wherein the bipedal robot (1) is an exoskeleton accommodating a human operator.

14. Method for stabilizing a bipedal robot (1) presenting a plurality of degrees of freedom actuated by actuators, characterized it comprises the steps of:
(d) providing commands to said actuators of the robot (1) with the neural network trained using the method according to any one claims 1 to 13.

15. System comprising a server (10) and a bipedal robot (1) presenting a plurality of degrees of freedom actuated by actuators, each comprising data processing means (11, 11'), **characterized in that** said data processing means (11, 11') are respectively configured to implement the method for training a neural network for stabilizing the robot (1) according to any one of claims 1 to 13 and the method for stabilizing the exoskeleton (1) according to claim 14.

16. Computer program product comprising code instructions for executing the method for training a neural network for stabilizing the robot (1) according to any one of claims 1 to 13 or the method for stabilizing the robot (1) according to claim 14, when said program is run on a computer.

17. Storage means readable by a computer equipment on which a computer program product comprises code instructions for executing the method for training a neural network for stabilizing the robot (1) according to any one of claims 1 to 13 or the method for stabilizing the robot (1) according to claim 14.

FIG. 1

**FIG. 2**

(a) Applying sequence of pushes

(b) RL on NN to maximise reward representative of a recovery from each push

Simulation

(c) Storing NN

(d) Stabilizing

**FIG. 3**

1

FIG. 4

**FIG. 5**

Europäisches
Patentamt

European
Patent Office

Office européen
des brevets

# EUROPEAN SEARCH REPORT

**Application Number**

EP 22 30 5215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CHANGXIN HUANG ET AL: "Hybrid and dynamic policy gradient optimization for bipedal robot locomotion", ARXIV.ORG, CORNELL UNIVERSITY LIBRARY, 201 OLIN LIBRARY CORNELL UNIVERSITY ITHACA, NY 14853, 5 July 2021 (2021-07-05), XP091007569, | 1-5,12, 14-17 | INV. B25J9/00 B25J9/16 B62D57/032 G06N3/08 G06N3/00 |
| A | * abstract; figures 1,2,3,4,6,8 * * page 3, paragraph 3 * * page 6, paragraph 5.1 * * pages 7,8, paragraph 5.2.1 * * page 9, paragraphs 5.2.4,6 * * page 12, paragraph B.1 * ----- | 6,10,11 | |
| X | VISAK KUMAR: "Learning Control Policies for Fall prevention and safety in bipedal locomotion", ARXIV.ORG, CORNELL UNIVERSITY LIBRARY, 201 OLIN LIBRARY CORNELL UNIVERSITY ITHACA, NY 14853, 4 January 2022 (2022-01-04), XP091133388, * Chapter 3.2 * * page 29, paragraph 2 * * page 34, paragraph 3 * * page 39, paragraph 3 * ----- | 1,5,13 | |

**TECHNICAL FIELDS SEARCHED (IPC)**

B25J
B62D

-/--

The present search report has been drawn up for all claims

| Place of search | Date of completion of the search | Examiner |
|---|---|---|
| Munich | 10 August 2022 | Lumineau, Stéphane |

EPO FORM 1503 03.82 (P04C01)

Europäisches
Patentamt

European
Patent Office

Office européen
des brevets

# EUROPEAN SEARCH REPORT

Application Number

EP 22 30 5215

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WANG SONG ET AL: "Anti-push Method of Biped Robot Based on Motion Capture Point and Reinforcement Learning", 2020 5TH INTERNATIONAL CONFERENCE ON ADVANCED ROBOTICS AND MECHATRONICS (ICARM), IEEE, 18 December 2020 (2020-12-18), pages 408-413, XP033825563, DOI: 10.1109/ICARM49381.2020.9195313 [retrieved on 2020-09-11] * abstract; figures 3,5 * * page 411, paragraphs III.D, III.E * * page 412, paragraph IV * | 1 | |
| X | ZHAOMING XIE ET AL: "Feedback Control For Cassie With Deep Reinforcement Learning", ARXIV.ORG, CORNELL UNIVERSITY LIBRARY, 201 OLIN LIBRARY CORNELL UNIVERSITY ITHACA, NY 14853, 15 March 2018 (2018-03-15), XP081240120, * abstract; figures 1,2,3 * * Chapter IV.A * | 1,7-9 | |

TECHNICAL FIELDS
SEARCHED        (IPC)

The present search report has been drawn up for all claims

| Place of search | Date of completion of the search | Examiner |
|---|---|---|
| Munich | 10 August 2022 | Lumineau, Stéphane |

CATEGORY OF CITED DOCUMENTS

X : particularly relevant if taken alone
Y : particularly relevant if combined with another
   document of the same category
A : technological background
O : non-written disclosure
P : intermediate document

T : theory or principle underlying the invention
E : earlier patent document, but published on, or
   after the filing date
D : document cited in the application
L : document cited for other reasons

& : member of the same patent family, corresponding
   document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 3568266 A
- FR 3101463
- WO 2015140352 A
- WO 2015140353 A

**Non-patent literature cited in the description**

- **T. GURRIET ; S. FINET ; G. BOERIS ; A. DUBURCQ ; A. HEREID ; O. HARIB ; M. MASSELIN ; J. GRIZZLE ; A. D. AMES.** Towards restoring locomotion for paraplegics: Realizing dynamically stable walking on exoskeletons. *2018 IEEE International Conference on Robotics and Automation (ICRA),* 2018, 2804-2811
- **Z. LI ; X. CHENG ; X. B. PENG ; P. ABBEEL ; S. LEVINE ; G. BERSETH ; K. SREENATH.** Reinforcement learning for robust parameterized locomotion control of bipedal robots. *CoRR,* 2021
- **S. MYSORE ; B. EL MABSOUT ; R. MANCUSO ; K. SAENKO.** *Regularizing action policies for smooth control with reinforcement learning,* 2020, vol. 12